# EUROPEAN PATENT SPECIFICATION

(11) **EP 3 854 579 B1**
(45) Date of publication and mention of the grant of the patent: **26.06.2024**
(21) Application number: 21152010.1
(22) Date of filing: 18.01.2021
(51) Int. Cl.: B32B 5/02, A45C 5/02, A45C 5/03, A45C 13/00, B32B 27/12, B32B 27/28, B32B 27/32

(54) **LAMINATE OF CASING AND METHOD OF MANUFACTURING THE SAME**
LAMINAT FÜR GEHÄUSE UND VERFAHREN ZUR HERSTELLUNG DAVON
STRATIFIÉ DE BOÎTIER ET SON PROCÉDÉ DE FABRICATION

(30) Priority: 23.01.2020 CN 202010075956
(43) Date of publication of application: 28.07.2021
(73) Proprietor: Dong Guan Aconic Fabric Co., Ltd, Qiaotou Town Dongguan, Guangdong (CN)
(72) Inventor: WANG, YAO-I, CHANGHUA COUNTY (TW)
(74) Representative: Straus, Alexander

(56) References cited:
- EP-A2- 0 305 207

## Description

### BACKGROUND OF THE INVENTION

### 1. Technical Field

The present application relates to a laminate of a casing and a method of manufacturing the same. The surface of the laminate has the feature of soft texture and the support layer has the drop proof feature.

### 2. Description of the Related Art

Conventional casings of rigid suitcases are usually made from ABS (Acrylonitrile Butadiene Styrene) resin, PC (polycarbonate), carbon steel and so on. Currently on the market there is no such rigid suitcase that is formed mainly by felt. Although felt gives soft texture and gloss, it is not suitable for use in manufacturing rigid suitcases. Owing that the suitcase is required having the drop resistant feature, considering using conventional rigid casing material and adhering felt fibers firmly to the conventional rigid casing, it would takes considerable time periods and manual efforts though conventional manufacturing process. Therefore, the conventional art still has room for improvement. EP0305207 A2 discloses a molded shell for luggage with a relatively low modulus, resilient, semirigid luggage shell constructed of a thermally formed composite material which will give an article of luggage the appearance of high modulus, hard shell, molded luggage, yet allow it to be deformed and thereafter substantially return to its predetermined shape. The shell comprises a first nonwoven batt comprised of thermoplastic resin fibers and defining a first and a second face, and an exterior material attached to the first face. The first nonwoven batt and the exterior material being thermally formed to a configuration.

### BRIEF SUMMARY OF THE INVENTION

In view of the aforesaid drawbacks of the conventional art, it is an objective of the present application to provide a novel structure of a laminate of a casing which features in soft texture and have the feature of rigidness and drop resistance.

In order to achieve the above and other objectives, the present application provides a laminate of a casing. The laminate is integrally made from a first felt layer, a support layer and a waterproof layer. The first felt layer and the support layer both have a first surface and a second surface opposing the first surface. The first surface of the support layer is melted and attached to the second surface of the first felt layer. The waterproof layer is attached to the second surface of the support layer, and the support layer is mainly made from felt. The first felt layer is water-repellent. The support layer is made from felt and formed by curing a second felt layer. The first felt layer and the second felt layer have low-melting-point fibers and stuffing fibers of specific weigh percentage. The weight percentage of the low-melting-point fibers of the second felt layer is greater than the weight percentage of the low-melting-point fibers of the first felt layer. According to an embodiment of the invention, the laminate further comprises a third felt layer integrally attached to an opposing surface of the waterproof layer opposite to the support layer. According to an embodiment of the invention, the first felt layer comprises 5-30 wt% low-melting-point fibers and 70-95 wt% stuffing fibers, whereas the second felt layer comprises 40-80 wt% low-melting-point fibers and 20-60 wt% stuffing fibers. According to an embodiment of the invention, the first felt layer comprises 15 wt% low-melting-point fibers and 85 wt% stuffing fibers, whereas the second felt layer comprises 70 wt% low-melting-point fibers and 30 wt% stuffing fibers. According to an embodiment of the invention, the third felt layer comprises low-melting-point fibers and stuffing fibers; the low-melting-point fibers of the first and third felt layers are made of the same material and have the same weight percentage, and the stuffing fibers of the first and third felt layers are made of the same material and have the same weight percentage. According to an embodiment of the invention, there is also provided a rigid felt suitcase comprising a shell having an outer surface and an inner surface and being manufactured from the laminate as explained above in which the first surface of the first felt layer of the laminate forms the outer surface of the shell, and a surface of the third felt layer opposite to the waterproof layer forms the inner surface of the shell.

Through the structural design of the aforementioned laminate of the casing, the laminate has the feature of soft texture because of the first felt layer and the features of rigidness and drop resistance because of the support layer.

The present application further provides a method of manufacturing a laminate of a casing. The method is adapted to manufacture the laminate of the casing by a first felt layer, a second felt layer and a waterproof layer. The method comprises the steps of: providing the first felt layer, the second felt layer and the waterproof layer, the second felt layer having a first surface and a second surface opposing the first surface; punching and joining the first felt layer to the first surface of the second felt layer; attaching the waterproof layer to the second surface of the second felt layer, wherein both of the first felt layer and the second felt layer have low-melting-point fibers and stuffing fibers of specific weight percentage , the weight percentage of the low-melting-point fibers of the second felt layer is greater than the weight percentage of the low-melting-point fibers of the first felt layer, and the weight percentage of the stuffing fibers of the second felt layer is less than the weight percentage of the stuffing fibers of the first felt layer; heating the first felt layer, second felt layer and waterproof layer that are joined so as to melt the low-melting-point fibers of the second felt layer and first felt layer and not to melt the stuffing fibers of the first felt layer and the second felt layer; and die-pressing and cooling the first felt layer, the second felt layer and the waterproof layer that are heated, thereby allowing the second felt layer to be cured to form the support layer and allowing a surface of the first felt layer to be melted and attached to the first surface of the support layer, so as for the first felt layer, the support layer and the waterproof layer to jointly form the laminate. The first felt layer is water-repellent. According to an embodiment of the invention, the waterproof layer is attached to the second surface of the second felt layer by adhesion.

The step of punching and joining the first felt layer to the second felt layer enables the first felt layer and the second felt layer to be coupled together to form a unitary structure quickly and firmly and then enables a laminate to be integrally manufactured once and for all by heating and die-pressing. The number of the manufacturing steps are less, rendering the manufacturing process efficient, effectively enhance production yield and process soft felt layers at special proportions and by special art, such that the resultant rigid suitcase is qualifies to be drop resistant and maintains the velvety texture.

### BRIEF DESCRIPTION OF THE SEVERAL VIEWS OF THE DRAWINGS

A laminate of a casing and a method of manufacturing the same are provided by the present application, illustrated by example and embodiments and described below. However, the examples and embodiments and accompanying drawings are illustrative rather than restrictive of the claims of the present disclosure. The scope of the present invention is defined by the appended claims.
FIG. 1 is a perspective view of a suitcase according to an example of the present disclosure.
FIG. 2 is a lateral view of FIG. 1, showing part of the cross section of a casing of the suitcase of FIG. 1.
FIG. 3 is a partial enlarged view of FIG. 2.
FIG. 4 is an exploded view of FIG. 3.
FIG. 5 is a schematic view of a process flow of manufacturing a laminate of a casing according to an embodiment of the present disclosure.

### DETAILED DESCRIPTION OF THE INVENTION

Technical features of the present disclosure are hereunder illustrated with embodiments, depicted with drawings, and described below. Directional expressions used herein, such as "up," "down," "in," "out," "top," and "bottom," are exemplary, descriptive terms which must be interpreted from a layman's perspective and must not be restrictive of the appended claims of the present disclosure.

Technical features of the present application are hereunder illustrated with embodiments, depicted with drawings, and described below.

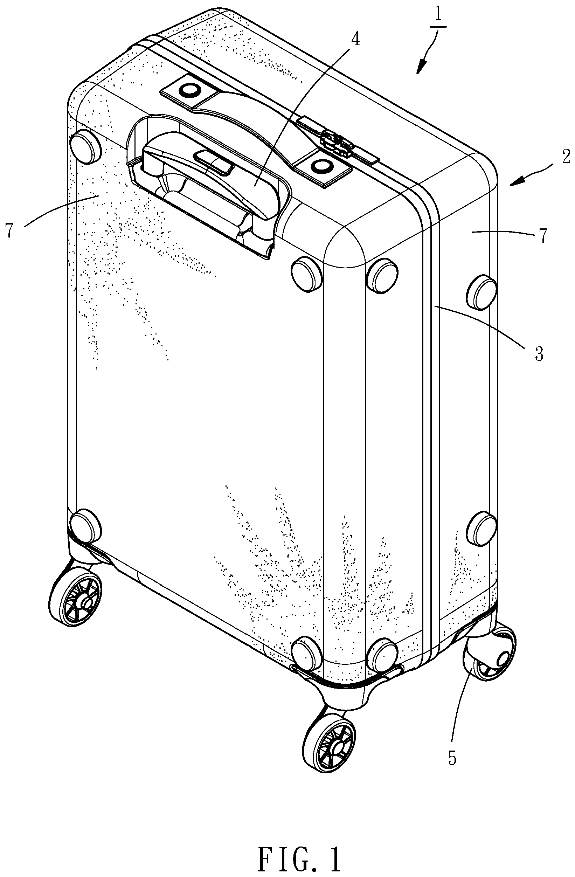

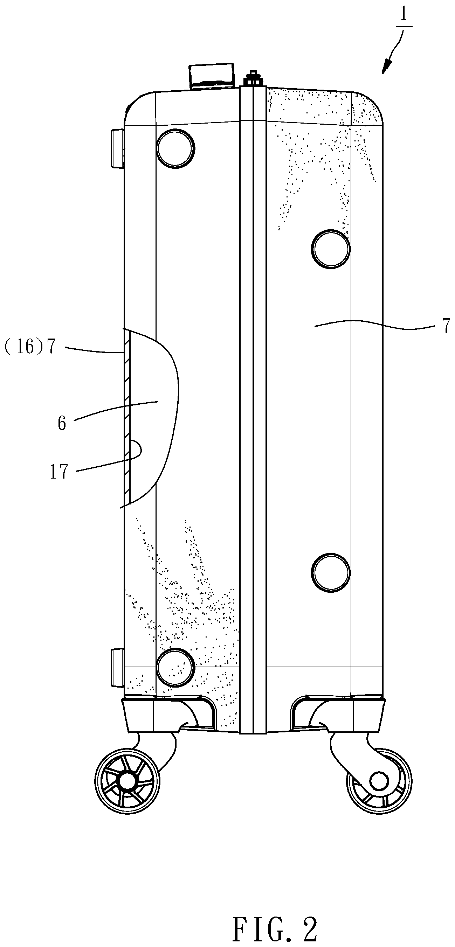

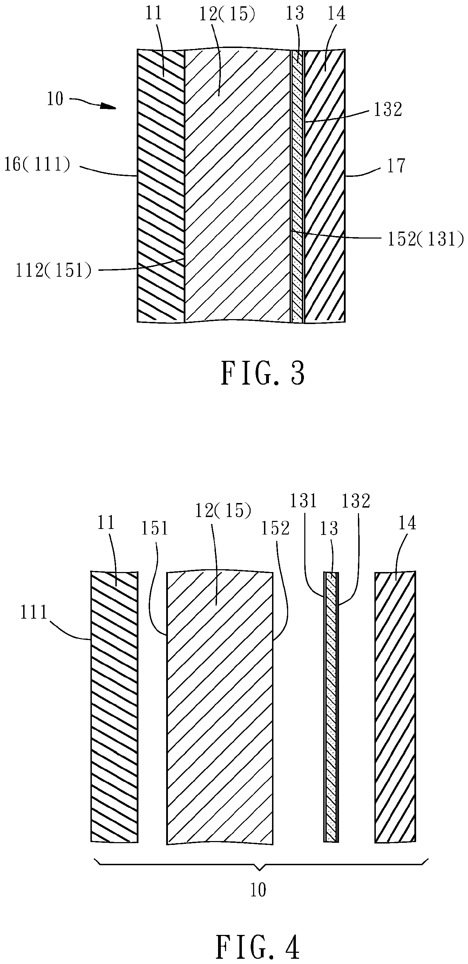

Referring to FIG. 1 and FIG. 2, shows an exemplary suitcase 1 of the present disclosure comprising a casing 2. The casing 2 comprises two shells 7. The two shells 7 are connected, such that a receiving space 6 (disposed in the suitcase 1 and shown in FIG. 2) is defined between the two shells 7. A zipper 3 is disposed between the two shells 7. The zipper 3 can be pulled open to expose the receiving space 6. One of the two shells 7 has a telescopic handle 4. Wheels 5 are disposed at the bottom of the casing 2. The two shells 7 are each made of a laminate 10 (shown in FIG. 3). The two shells 7 are structurally identical; thus, the description below is exemplified by one of the shells 7, and the other shell 7 is inferable by analogy.

Referring to FIG. 2 through FIG. 4, the shell 7 has an outer surface 16 and an inner surface 17. Both of the outer surface 16 and the inner surface 17 of the shell 7 can be touched by users. The shell 7 is integrally made of a laminate 10 and it comprises, from outside to inside, a first felt layer 11, a support layer 15, a waterproof layer 13 and a third felt layer 14. The first felt layer 11 has a first surface 111 and a second surface 112 opposing the first surface 111. The support layer 15 has a first surface 151 and a second surface 152 opposing the first surface 151. The first surface 111 of the first felt layer 11 forms the outer surface 16 of the shell 7. The second surface 112 of the first felt layer 11 is melted and attached to the first surface 151 of the support layer 15. The first felt layer 11 comprises 5-30 wt% low-melting-point fibers and 70-95 wt% stuffing fibers. In this example, the first felt layer 11 comprises 15 wt% low-melting-point fibers and 85 wt% stuffing fibers, with the low-melting-point fibers and stuffing fibers being evenly mixed, and the first felt layer 11 having been immersed in a waterproofing agent to attain water repellency. The low-melting-point fibers are fibers with a low melting point. The stuffing fibers have a higher melting point than the low-melting-point fibers. The low-melting-point fibers are PET (polyethylene terephthalate) fibers with a melting point ranging from 110°C to 130°C. The stuffing fibers are also made from PET but made by a manufacturing process different from that of the low-melting-point fibers, allowing the stuffing fibers to have a melting point of 180°C, give a soft texture, and be made from recycled PET bottles to meet environmental protection requirements. Alternatively, the stuffing fibers are made from any other types of polyester (PET). The low-melting-point fibers and stuffing fibers have identical PET monomer structure. However, the aforesaid two fibers are made by different manufacturing processes, respectively; consequently, the aforesaid two fibers differ in terms of polymeric soft chain structure and thus its crystallization behavior are therefore changed, causing them to have different melting points.

The support layer 15 is made from felt and formed by curing a second felt layer 12. Its manufacturing process flow will be described in the following paragraphs. It is noted that the support layer 15 is of high hardness, such that the laminate 10 has features of rigidness and drop resistance to meet the structural strength requirements of the suitcase 1. The second felt layer 12 comprises 40-80 wt% low-melting-point fibers and 20-60 wt% stuffing fibers. In this example, the second felt layer 12 comprises 70 wt% low-melting-point fibers and 30 wt% stuffing fibers, and its low-melting-point fibers and stuffing fibers are made from the same material as their counterparts in the case of the first felt layer 11. The support layer 15 is of a greater thickness than the first felt layer 11.

It is worthwhile mentioning that the weight percentage of the low-melting-point fibers and the weight percentage of the stuffing fibers of the first felt layer 11 and second felt layer 12 are of importance. If the weight percentage of the low-melting-point fibers of the second felt layer 12 is less than 60, the support layer 15 thus formed will be vulnerable to drop. If the weight percentage of the low-melting-point fibers of the first felt layer 11 is overly high, the low-melting-point fibers of the first felt layer 11 or second felt layer 12 being braked by a braking machine will be melted by the residual heat released from the braking tools of the braking machine during the braking process. The molten low-melting-point fibers impede the braking process and thus adhere to the parts and components of the braking machine. As a result, the obstructive molten low-melting-point fibers render it difficult to cleanse the braking machine and even damage the braking machine.

The waterproof layer 13 prevents water from seeping into the receiving space 6 of the suitcase 1. In this example, the waterproof layer 13 is provided in the form of a PE film. PE films lack adhesiveness. Thus, in this example, two PES (polyethersulfone) films 131, 132 are disposed on the outer side and inner side of the PE film, respectively. PES films have adhesiveness, and thus the waterproof layer 13 is directly adhered between the support layer 15 and the third felt layer 14 (as shown in FIG. 3) through PES films 131, 132. The waterproof layer 13 may also be provided in the form of an EVA (polyethylene vinylacetate) film.

The third felt layer 14 forms the inner surface 17 of the shell 7. The third felt layer 14 is adhered to the second surface 152 of the support layer 15 through the PES films of the waterproof layer 13. In this example, the first felt layer 11 and the third felt layer 14 are derived from the same felt fabric, such that the first and third felt layers 11, 14 are identical in terms of the material and weight percentage of the low-melting-point fibers and stuffing fibers. The third felt layer 14 and the first felt layer 11 may also be separately manufactured, and the material and weight percentage of their stuffing fibers and low-melting-point fibers are adjustable as needed.

By means of the structural design of the laminate 10, the laminate 10 has soft texture because of the first felt layer 11 and the third felt layer 14, the laminate 10 also has the features of rigidness and drop resistance because of the support layer 15, such that the laminate 10 has sufficient mechanical strength to be applicable to the suitcase 1.

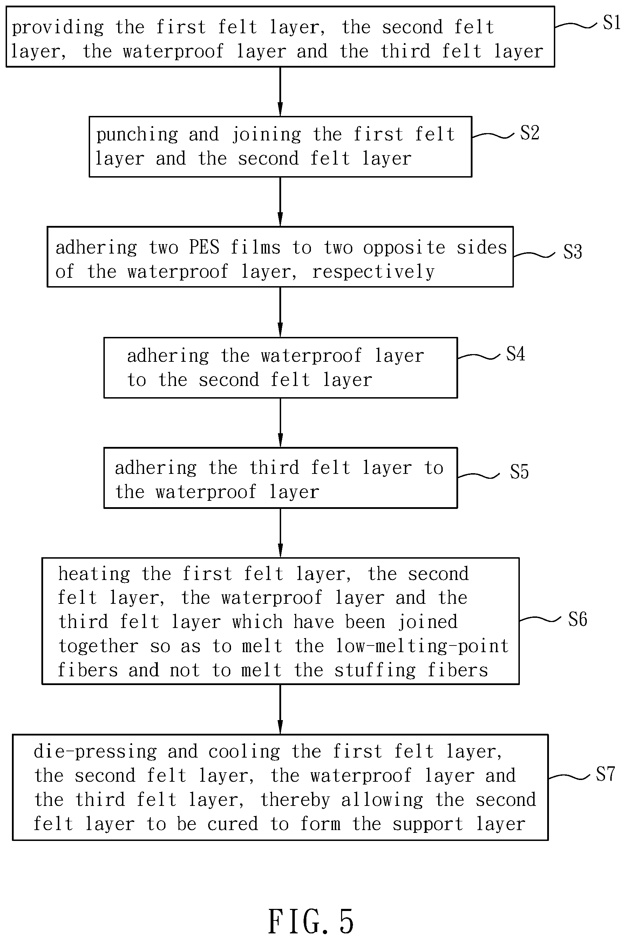

The present disclosure further provides a method of manufacturing a laminate 10 of a casing. Referring to FIG. 5, showing an example of the method, the method comprises steps as follows:
Step S1: providing the first felt layer 11, the second felt layer 12, the waterproof layer 13 and the third felt layer 14. The first felt layer 11 and the third felt layer 14 are made from the same felt fabric, but the present application is not limited thereto. The first felt layer 11 and the third felt layer 14 each comprise 5-30 wt% low-melting-point fibers and 70-95 wt% stuffing fibers, but the present disclosure is not limited thereto. Both the low-melting-point fibers and the stuffing fibers are PET fibers. The stuffing fibers are made from recycled PET bottles. The stuffing fibers have a higher melting point than the low-melting-point fibers. The felt fabric is immersed in a waterproofing agent before undergoing a bake-drying process, such that the first and third felt layer 11, 14 are water-repellent. The second felt layer 12 comprises 40-80 wt% low-melting-point fibers and 20-60 wt% stuffing fibers. The low-melting-point fibers and stuffing fibers of the second felt layer 12 are made from the same material as their counterparts of the first felt layer 11. The waterproof layer 13 is provided in the form of a PE film. Both the stuffing fibers and low-melting-point fibers are evenly mixed. The weight percentage of the low-melting-point fibers of the second felt layer 12 is higher than the weight percentage of the low-melting-point fibers of the first felt layer 11. The weight percentage of the stuffing fibers of the second felt layer 12 is lower than the weight percentage of the stuffing fibers of the first felt layer 11.
Step S2: punching and joining the first felt layer 11 and the second felt layer 12 with a needle punching machine, such that the first felt layer 11 and the second felt layer 12 form a unitary structure.
Step S3: adhering two PES films 131, 132 to two opposite sides of the waterproof layer 13, respectively.
Step S4: adhering the waterproof layer 13 that is adhered to the PES films 131 to a surface of the second felt layer 12 that is opposite to the first felt layer 11.
Step S5: adhering the third felt layer 14 to the waterproof layer 13 through the PES film 132.
Step S6: heating the first felt layer 11, the second felt layer 12, the waterproof layer 13 and the third felt layer 14 which have been joined together so as to melt the low-melting-point fibers of the second felt layer 12 and the low-melting-point fibers of the first felt layer 11 and not to melt the stuffing fibers of the first felt layer 11 and the stuffing fibers of the second felt layer 12. In this example, the first felt layer 11, the second felt layer 12, the waterproof layer 13 and the third felt layer 14, which have been joined together, are baked in an oven at 200°C to 210°C for a short time period to melt the low-melting-point fibers of the first felt layer 11 and the second felt layer 12 and soften the stuffing fibers of the first felt layer 11 and the second felt layer 12, such that the first felt layer 11 and the second felt layer 12 are melt and joined together. During the heating process, the PES film on the waterproof layer 13 also melts, such that the molten PES film on the waterproof layer 13 and the molten low-melting-point fibers of the second felt layer 12 and the third felt layer 14 are melted together.
Step S7: die-pressing and cooling the first felt layer 11, the second felt layer 12, the waterproof layer 13 and the third felt layer 14 by cool-die die-pressing, thereby allowing the second felt layer 12 to be cured to form the support layer 15. At this point in time, the first felt layer 11, the support layer 15, the waterproof layer 13 and the third felt layer 14 jointly form the laminate 10. The integrally formed laminate 10 serves as the shells 7 of the suitcase 1. The present application discloses processing soft felt layers at special proportions and by special art, such that the rigid suitcase 1 thus manufactured is qualified to be drop resistant and maintains the velvety texture. Comparing to using conventional rigid suitcase material and firmly adhering felt fibers to the suitcase, the method described above more manufacturing process and manual efforts can be spared.

It is worthwhile mentioned that, the advantage of having the waterproof layer 13 connected between the second felt layer 12 and the third felt layer 14 rather than between the first felt layer 11 and the second felt layer 12 is as follows: the shells 7 of the suitcase 1 bend inward. The low-melting-point fibers of the second felt layer 12 outnumber the low-melting-point fibers of the first felt layer 11; thus, during the process of heating and curing the second felt layer 12, the second felt layer 12 contracts more than the first felt layer 11 to thereby cause the first felt layer 11 to bend toward and compress the second felt layer 12, rendering it easy for the shells 7 to be die-pressed and formed. By contrast, if the waterproof layer 13 is disposed between the first felt layer 11 and the second felt layer 12, surfaces of the shells 7 die-pressed and formed are likely to be uneven.

## Claims

1. A laminate (10) of a casing (2) being integrally made from a first felt layer (11), a support layer (15) and a waterproof layer (13), the first felt layer (11) and the support layer (15) both having a first surface (111, 151) and a second surface (112, 152) opposing the first surface (111, 151), the first surface (151) of the support layer (15) being melted and attached the second surface (112) of the first felt layer (11), the waterproof layer (13) being attached to the second surface (152) of the support layer (15), wherein the support layer (15) is made from felt; wherein the first felt layer is water-repellent; the support layer is made from felt and formed by curing a second felt layer; and both of the first felt layer and the second felt layer have low-melting-point fibers and stuffing fibers of specific weigh percentage, the weight percentage of the low-melting-point fibers of the second felt layer is greater than the weight percentage of the low-melting-point fibers of the first felt layer .

2. The laminate (10) of the casing (2) according to claim 1, further comprising a third felt layer (14) integrally attached to an opposing surface of the waterproof layer (13) opposite to the support layer (15).

3. The laminate (10) of the casing (2) according to claim 1 or 2, wherein the support layer (15) is manufactured by a method comprising the steps of: providing the first felt layer (11) and a second felt layer (12); punching and joining the first felt layer (11) to the first surface (111) of the second felt layer (12); heating the first felt layer (11) and the second felt layer (12), so as to melt the low-melting-point fibers of the second felt layer (12) and the first felt layer (11) and not to melt the stuffing fibers of the first felt layer (11) and the second felt layer (12); and cooling the first felt layer (11) and the second felt layer (12), thereby allowing the second felt layer (12) to be cured to form the support layer (15).

4. The laminate (10) of the casing (2) according to claim 3, wherein the first felt layer (11) comprises 5-30 wt% low-melting-point fibers and 70-95 wt% stuffing fibers, whereas the second felt layer (12) comprises 40-80 wt% low-melting-point fibers and 20-60 wt% stuffing fibers.

5. The laminate (10) of the casing (2) according to claim 3, wherein the first felt layer (11) comprises 15 wt% low-melting-point fibers and 85 wt% stuffing fibers, whereas the second felt layer (12) comprises 70 wt% low-melting-point fibers and 30 wt% stuffing fibers.

6. The laminate (10) of the casing (2) according to claim 2, wherein the third felt layer (14) comprises low-melting-point fibers and stuffing fibers; the low-melting-point fibers of the first and third felt layers (11, 14) are made of the same material and have the same weight percentage, and the stuffing fibers of the first and third felt layers (11, 14) are made of the same material and have the same weight percentage.

7. A rigid felt suitcase (1), comprising:
a shell (7) having an outer surface (16) and an inner surface (17) and being manufactured from the laminate (10) of claim 2, wherein the first surface (111) of the first felt layer (11) of the laminate (10) forms the outer surface (16) of the shell (7), and a surface of the third felt layer (14) opposite to the waterproof layer (13) forms the inner surface (17) of the shell (7).

8. A method of manufacturing a laminate (10) of a casing (2) according to claim 1, adapted to manufacture the laminate (10) from a first felt layer (11), a second felt layer (12) and a waterproof layer (13), the method comprising the steps of:
providing the first felt layer (11), the second felt layer (12) and the waterproof layer (13), the second felt layer (12) having a first surface and a second surface opposing the first surface;
punching and joining the first felt layer (11) to the first surface (111) of the second felt layer (12); attaching the waterproof layer (13) to the second surface of the second felt layer (12), wherein both of the first felt layer (11) and the second felt layer (12) have low-melting-point fibers and stuffing fibers of specific weight percentage , the weight percentage of the low-melting-point fibers of the second felt layer (12) is greater than the weight percentage of the low-melting-point fibers of the first felt layer (11), and the weight percentage of the stuffing fibers of the second felt layer (12) is less than the weight percentage of the stuffing fibers of the first felt layer (11); and
heating the first felt layer (11), the second felt layer (12) and the waterproof layer (13) that are joined so as to melt the low-melting-point fibers of the first felt layer (11) and the second felt layer (12) and not to melt the stuffing fibers of the first felt layer (11) and the second felt layer (12), die-pressing and cooling the first felt layer (11), the second felt layer (12) and the waterproof layer (13) that are heated, thereby allowing the second felt layer (12) to be cured to form a support layer (15) and allowing a surface of the first felt layer (11) to be melted and attached to the first surface (151) of the support layer (15), so as for the first felt layer (11), the support layer (15) and the waterproof layer (13) to jointly form the laminate (10), wherein the first felt layer (11) is water-repellent.

9. The method of manufacturing the laminate (10) of the casing (2) according to claim 8, wherein the first felt layer (11) comprises 5-30 wt% low-melting-point fibers and 70-95 wt% stuffing fibers, whereas the second felt layer (12) comprises 40-80 wt% low-melting-point fibers and 20-60 wt% stuffing fibers.

10. The method of manufacturing the laminate (10) of the casing (2) according to claim 9, wherein the first felt layer (11) comprises 15 wt% low-melting-point fibers and 85 wt% stuffing fibers, whereas the second felt layer (12) comprises 70 wt% low-melting-point fibers and 30 wt% stuffing fibers.

11. The method of manufacturing the laminate (10) of the casing (2) according to claim 8 or 9, wherein the waterproof layer (13) is attached to the second surface of the second felt layer (12) by adhesion.

## Patentansprüche

1. Laminat (10) eines Gehäuses (2), das einstückig aus einer ersten Filzschicht (11), einer Trägerschicht (15) und einer wasserdichten Schicht (13) hergestellt ist, worin die erste Filzschicht (11) und die Trägerschicht (15) beide eine erste Oberfläche (111, 151) und eine zweite Oberfläche (112, 152) aufweisen, die der ersten Oberfläche (111, 151) abgewandt ist, worin die erste Oberfläche (151) der Trägerschicht (15) geschmolzen und an der zweiten Oberfläche (112) der ersten Filzschicht (11) befestigt ist, worin die wasserdichte Schicht (13) an der zweiten Oberfläche (152) der Trägerschicht (15) befestigt ist, worin die Trägerschicht (15) aus Filz hergestellt ist; worin die erste Filzschicht wasserabweisend ist; die Trägerschicht aus Filz hergestellt ist und durch Aushärten einer zweiten Filzschicht ausgebildet wird; und sowohl die erste Filzschicht als auch die zweite Filzschicht Fasern mit niedrigem Schmelzpunkt und Füllfasern mit einem bestimmten Gewichtsprozentsatz aufweisen, worin der Gewichtsprozentsatz der Fasern mit niedrigem Schmelzpunkt der zweiten Filzschicht größer ist als der Gewichtsprozentsatz der Fasern mit niedrigem Schmelzpunkt der ersten Filzschicht.

2. Laminat (10) des Gehäuses (2) nach Anspruch 1, ferner umfassend eine dritte Filzschicht (14), die einstückig an einer der Trägerschicht (15) abgewandten Oberfläche der wasserdichten Schicht (13) befestigt ist.

3. Laminat (10) des Gehäuses (2) nach Anspruch 1 oder 2, wobei die Trägerschicht (15) durch ein Verfahren hergestellt wird, das die Schritte umfasst: Bereitstellen der ersten Filzschicht (11) und einer zweiten Filzschicht (12); Stanzen und Verbinden der ersten Filzschicht (11) mit der ersten Oberfläche (111) der zweiten Filzschicht (12); Erhitzen der ersten Filzschicht (11) und der zweiten Filzschicht (12), um die Fasern mit niedrigem Schmelzpunkt der zweiten Filzschicht (12) und der ersten Filzschicht (11) zu schmelzen und nicht die Füllfasern der ersten Filzschicht (11) und der zweiten Filzschicht (12) zu schmelzen; und Abkühlen der ersten Filzschicht (11) und der zweiten Filzschicht (12), wodurch die zweite Filzschicht (12) ausgehärtet werden kann, um die Trägerschicht (15) auszubilden.

4. Laminat (10) des Gehäuses (2) nach Anspruch 3, worin die erste Filzschicht (11) 5-30 Gew.-% Fasern mit niedrigem Schmelzpunkt und 70-95 Gew.-% Füllfasern umfasst, während die zweite Filzschicht (12) 40-80 Gew.-% Fasern mit niedrigem Schmelzpunkt und 20-60 Gew.-% Füllfasern umfasst.

5. Laminat (10) des Gehäuses (2) nach Anspruch 3, worin die erste Filzschicht (11) 15 Gew.-% niedrigschmelzende Fasern und 85 Gew.-% Füllfasern umfasst, während die zweite Filzschicht (12) 70 Gew.-% niedrigschmelzende Fasern und 30 Gew.-% Füllfasern umfasst.

6. Laminat (10) des Gehäuses (2) nach Anspruch 2, worin die dritte Filzschicht (14) Fasern mit niedrigem Schmelzpunkt und Füllfasern umfasst; die Fasern mit niedrigem Schmelzpunkt der ersten und der dritten Filzschicht (11, 14) aus demselben Material bestehen und denselben Gewichtsprozentsatz aufweisen, und die Füllfasern der ersten und der dritten Filzschicht (11, 14) aus demselben Material bestehen und denselben Gewichtsprozentsatz aufweisen.

7. Hartfilzkoffer (1), bestehend aus:
einer Schale (7), die eine Außenfläche (16) und eine Innenfläche (17) aufweist und aus dem Laminat (10) nach Anspruch 2 hergestellt ist, worin die erste Oberfläche (111) der ersten Filzschicht (11) des Laminats (10) die Außenfläche (16) der Schale (7) bildet und eine Oberfläche der dritten Filzschicht (14), die der wasserdichten Schicht (13) abgewandt ist, die Innenfläche (17) der Schale (7) ausbildet.

8. Verfahren zur Herstellung eines Laminats (10) eines Gehäuses (2) nach Anspruch 1, das geeignet ist, das Laminat (10) aus einer ersten Filzschicht (11), einer zweiten Filzschicht (12) und einer wasserdichten Schicht (13) herzustellen, worin das Verfahren die folgenden Schritte umfasst:
Bereitstellen der ersten Filzschicht (11), der zweiten Filzschicht (12) und der wasserdichten Schicht (13), worin die zweite Filzschicht (12) eine erste Oberfläche und eine der ersten Oberfläche abgewandte zweite Oberfläche aufweist; Stanzen und Verbinden der ersten Filzschicht (11) mit der ersten Oberfläche (111) der zweiten Filzschicht (12); Anbringen der wasserdichten Schicht (13) an der zweiten Oberfläche der zweiten Filzschicht (12), worin sowohl die erste Filzschicht (11) als auch die zweite Filzschicht (12) Fasern mit niedrigem Schmelzpunkt und Füllfasern mit einem bestimmten Gewichtsprozentanteil aufweisen, worin der Gewichtsprozentsatz der Fasern mit niedrigem Schmelzpunkt der zweiten Filzschicht (12) größer ist als der Gewichtsprozentsatz der Fasern mit niedrigem Schmelzpunkt der ersten Filzschicht (11), und der Gewichtsprozentsatz der Füllfasern der zweiten Filzschicht (12) kleiner ist als der Gewichtsprozentsatz der Füllfasern der ersten Filzschicht (11); und
Erhitzen der ersten Filzschicht (11), der zweiten Filzschicht (12) und der wasserdichten Schicht (13), die miteinander verbunden sind, um die Fasern mit niedrigem Schmelzpunkt der ersten Filzschicht (11) und der zweiten Filzschicht (12) zu schmelzen und die Füllfasern der ersten Filzschicht (11) und der zweiten Filzschicht (12) nicht zu schmelzen, Pressen und Abkühlen der ersten Filzschicht (11), der zweiten Filzschicht (12) und der wasserdichten Schicht (13), die erhitzt sind, und dadurch Ermöglichen, dass die zweite Filzschicht (12) gehärtet wird, um eine Trägerschicht (15) auszubilden, und Ermöglichen, dass eine Oberfläche der ersten Filzschicht (11) geschmolzen und an der ersten Oberfläche (151) der Trägerschicht (15) befestigt wird, so dass die erste Filzschicht (11), die Trägerschicht (15) und die wasserdichte Schicht (13) gemeinsam das Laminat (10) bilden, worin die erste Filzschicht (11) wasserabweisend ist.

9. Verfahren zur Herstellung des Laminats (10) des Gehäuses (2) nach Anspruch 8, worin die erste Filzschicht (11) 5-30 Gew.-% Fasern mit niedrigem Schmelzpunkt und 70-95 Gew.-% Füllfasern umfasst, während die zweite Filzschicht (12) 40-80 Gew.-% Fasern mit niedrigem Schmelzpunkt und 20-60 Gew.-% Füllfasern umfasst.

10. Verfahren zur Herstellung des Laminats (10) der Hülle (2) nach Anspruch 9, worin die erste Filzschicht (11) 15 Gew.-% Fasern mit niedrigem Schmelzpunkt und 85 Gew.-% Füllfasern umfasst, während die zweite Filzschicht (12) 70 Gew.-% Fasern mit niedrigem Schmelzpunkt und 30 Gew.-% Füllfasern umfasst.

11. Verfahren zur Herstellung des Laminats (10) der Hülle (2) nach Anspruch 8 oder 9, bei dem die wasserdichte Schicht (13) an der zweiten Oberfläche der zweiten Filzschicht (12) durch Adhäsion befestigt wird.

## Revendications

1. Stratifié (10) d'une enveloppe (2) constitué intégralement d'une première couche de feutre (11), d'une couche de support (15) et d'une couche imperméable (13), la première couche de feutre (11) et la couche de support (15) ayant toutes deux une première surface (111, 151) et une deuxième surface (112, 152) opposée à la première surface (111, 151), la première surface (151) de la couche de support (15) étant fondue et fixée à la deuxième surface (112) de la première couche de feutre (11), la couche imperméable (13) étant fixée à la deuxième surface (152) de la couche de support (15), la couche de support (15) étant en feutre; la première couche de feutre est hydrofuge; la couche de support est en feutre et formée par le durcissement d'une deuxième couche de feutre; et la première couche de feutre et la deuxième couche de feutre ont toutes deux des fibres à faible point de fusion et des fibres de rembourrage d'un pourcentage de poids spécifique, le pourcentage de poids des fibres à faible point de fusion de la deuxième couche de feutre étant supérieur au pourcentage de poids des fibres à faible point de fusion de la première couche de feutre.

2. Stratifié (10) de l'enveloppe (2) selon la revendication 1, comprenant en outre une troisième couche de feutre (14) fixée intégralement à une surface opposée de la couche imperméable (13) à l'opposé de la couche de support (15).

3. Stratifié (10) de l'enveloppe (2) selon la revendication 1 ou 2, dans lequel la couche de support (15) est fabriquée par une méthode comprenant les étapes suivantes: fournir la première couche de feutre (11) et une deuxième couche de feutre (12); poinçonner et assembler la première couche de feutre (11) à la première surface (111) de la deuxième couche de feutre (12); chauffer la première couche de feutre (11) et la deuxième couche de feutre (12) de manière à faire fondre les fibres à bas point de fusion de la deuxième couche de feutre (12) et de la première couche de feutre (11) et à ne pas faire fondre les fibres de rembourrage de la première couche de feutre (11) et de la deuxième couche de feutre (12); et refroidir la première couche de feutre (11) et la deuxième couche de feutre (12), permettant ainsi à la deuxième couche de feutre (12) d'être durcie pour former la couche de support (15).

4. Stratifié (10) de l'enveloppe (2) selon la revendication 3, dans lequel la première couche de feutre (11) comprend 5-30 % en poids de fibres à bas point de fusion et 70-95 % en poids de fibres de rembourrage, tandis que la deuxième couche de feutre (12) comprend 40-80 % en poids de fibres à bas point de fusion et 20-60 % en poids de fibres de rembourrage.

5. Stratifié (10) de l'enveloppe (2) selon la revendication 3, dans lequel la première couche de feutre (11) comprend 15 % en poids de fibres à bas point de fusion et 85 % en poids de fibres de rembourrage, tandis que la deuxième couche de feutre (12) comprend 70 % en poids de fibres à bas point de fusion et 30 % en poids de fibres de rembourrage.

6. Stratifié (10) de l'enveloppe (2) selon la revendication 2, dans lequel la troisième couche de feutre (14) comprend des fibres à bas point de fusion et des fibres de rembourrage; les fibres à bas point de fusion de la première et de la troisième couche de feutre (11, 14) sont faites du même matériau et ont le même pourcentage de poids, et les fibres de rembourrage de la première et de la troisième couche de feutre (11, 14) sont faites du même matériau et ont le même pourcentage de poids.

7. Valise en feutre rigide (1), comprenant:
une coque (7) ayant une surface extérieure (16) et une surface intérieure (17) et fabriquée à partir du stratifié (10) de la revendication 2, dans laquelle la première surface (111) de la première couche de feutre (11) du stratifié (10) forme la surface extérieure (16) de la coque (7), et une surface de la troisième couche de feutre (14) opposée à la couche imperméable (13) forme la surface intérieure (17) de la coque (7).

8. Procédé de fabrication d'un stratifié (10) d'une enveloppe (2) selon la revendication 1, adapté pour fabriquer le stratifié (10) à partir d'une première couche de feutre (11), d'une deuxième couche de feutre (12) et d'une couche imperméable (13), le procédé comprenant les étapes suivantes:
fournir la première couche de feutre (11), la deuxième couche de feutre (12) et la couche imperméable (13), la deuxième couche de feutre (12) ayant une première surface et une deuxième surface opposée à la première surface; poinçonner et assembler la première couche de feutre (11) à la première surface (111) de la deuxième couche de feutre (12); fixer la couche imperméable (13) à la deuxième surface de la deuxième couche de feutre (12), la première couche de feutre (11) et la deuxième couche de feutre (12) étant toutes deux constituées de fibres à bas point de fusion et de fibres de rembourrage d'un pourcentage de poids spécifique, le pourcentage de poids des fibres à bas point de fusion de la deuxième couche de feutre (12) est supérieur au pourcentage de poids des fibres à bas point de fusion de la première couche de feutre (11), et le pourcentage de poids des fibres de rembourrage de la deuxième couche de feutre (12) est inférieur au pourcentage de poids des fibres de rembourrage de la première couche de feutre (11); et
chauffer la première couche de feutre (11), la deuxième couche de feutre (12) et la couche imperméable (13) qui sont jointes de manière à faire fondre les fibres à bas point de fusion de la première couche de feutre (11) et de la deuxième couche de feutre (12) et à ne pas faire fondre les fibres de rembourrage de la première couche de feutre (11) et de la deuxième couche de feutre (12), presser à l'emporte-pièce et refroidir la première couche de feutre (11), la deuxième couche de feutre (12) et la couche imperméable (13) qui ont été chauffées, permettant ainsi à la deuxième couche de feutre (12) d'être durcie pour former une couche de support (15) et à une surface de la première couche de feutre (11) d'être fondue et fixée à la première surface (151) de la couche de support (15), de manière à ce que la première couche de feutre (11), la couche de support (15) et la couche imperméable (13) forment ensemble le stratifié (10), dans lequel la première couche de feutre (11) est hydrofuge.

9. Procédé de fabrication du stratifié (10) de l'enveloppe (2) selon la revendication 8, dans lequel la première couche de feutre (11) comprend 5-30 % en poids de fibres à bas point de fusion et 70-95 % en poids de fibres de rembourrage, tandis que la deuxième couche de feutre (12) comprend 40-80 % en poids de fibres à bas point de fusion et 20-60 % en poids de fibres de rembourrage.

10. Procédé de fabrication du stratifié (10) de l'enveloppe (2) selon la revendication 9, dans lequel la première couche de feutre (11) comprend 15 % en poids de fibres à bas point de fusion et 85 % en poids de fibres de rembourrage, tandis que la deuxième couche de feutre (12) comprend 70 % en poids de fibres à bas point de fusion et 30 % en poids de fibres de rembourrage.

11. Procédé de fabrication du stratifié (10) de l'enveloppe (2) selon la revendication 8 ou 9, dans lequel la couche imperméable (13) est fixée à la deuxième surface de la deuxième couche de feutre (12) par adhérence.
